**Europäisches Patentamt**

**European Patent Office**

**Office européen des brevets**

(19)

(11) Publication number: **0 270 237**

**A1**

(12) # EUROPEAN PATENT APPLICATION

(21) Application number: **87309537.6**

(22) Date of filing: **29.10.87**

(51) Int. Cl.4: **B62D 55/04 , B62M 27/02**

(30) Priority: **29.10.86 US 924296**

(43) Date of publication of application:
**08.06.88 Bulletin 88/23**

(84) Designated Contracting States:
**AT BE CH DE ES FR GB GR IT LI NL SE**

(71) Applicant: **Cartwright, Richard D.**
**Route 3, Box 1107**
**Beaverton Oregon 97005(US)**

Applicant: **Hansen, David W.**
**15905 N.E. 31st Avenue**
**Ridgefield Washington 98642(US)**

Applicant: **Firth, John R.**
**5256 S.W. Humphrey Boulevard**
**Portland Oregon 97221(US)**

(72) Inventor: **Cartwright, Richard D.**
**Route 3, Box 1107**
**Beaverton Oregon 97005(US)**
Inventor: **Hansen, David W.**
**15905 N.E. 31st Avenue**
**Ridgefield Washington 98642(US)**
Inventor: **Firth, John R.**
**5256 S.W. Humphrey Boulevard**
**Portland Oregon 97221(US)**

(74) Representative: **Skerrett, John Norton Haigh**
**et al**
**H.N. & W.S. SKERRETT Rutland House 148**
**Edmund Street**
**Birmingham B3 2LQ(GB)**

(54) **Improvements in crawler-track attachments for all-terrain vehicles.**

(57) A crawler-track attachment (10) for an all-terrain-vehicle (ATV) with three or four wheels includes crawler tracks (12) which are looped over driving wheels of the ATV and over tires (24a, 24b) of wheels (22a, 22b) of the attachment (10). These wheels (22a, 22b) are mounted on axles (82a, 82b) carried by a T-shaped frame (18) which connects to the ATV through several attachment devices (26, 32, 38, 40) of improved design permitting proper location and adjustment with respect of the ATV. The crawler tracks (12) are fitted with traction bars (14a...14n) and gripper elements (16a...16n). A steering ski (42) as on a snow-mobile may also be fitted.

FIG.1

# IMPROVEMENTS IN CRAWLER-TRACK ATTACHMENTS FOR ALL-TERRAIN VEHICLES

The popularity of outdoor recreational activities has stimulated the development of many devices to help enthusiasts take advantage of the many opportunities now offered for such activities. Among these devices are those mechanized vehicles which include snow-mobiles and "all-terrain" vehicles (referred to hereinafter as ATV's) with three or four wheels, which enable their users to penetrate into areas normally only reached by great physical exertion or at appropriate seasons. Among the more popular of these machines are the three- and four-wheeled motorized vehicles with low-pressure tires, which give treat lateral stability, maneuverability, load-carrying capacity, and ease of use. However, even with the low -pressure tires, these vehicles are not very useful on snow, as the spaces between the lugs of the tread design will fill up with snow, reducing the tractive force almost to zero. Conversely, although snowmobiles are extremely useful on snow, they become difficult to use on dry ground or in marshy areas.

It will be seen that persons who enjoy exploring remote areas in all seasons are forced to consider the purchase or rental of two different machines to take advantage of such activities year-round.

## SUMMARY OF THE PRESENT INVENTION

The present invention is an attachment that permits one to modify a three-or four-wheel ATV so that it can be used in snow, without the expense of a snowmobile.

Briefly, the invention includes a pair of crawler-track means of novel design, looped around the tires of the driving wheels of an ATV, said crawler-track means also being looped around a second pair of substantially similar tires on a second pair of wheels mounted on a novel T-shaped structure by axle means. The invention also includes a novel means of mounting one or more skis on the front, or steering, wheels of an ATV, depending upon whether it is a three-or four-wheeler.

The preferred embodiment of the novel T-shaped structure is a part of a novel mounting means which attaches the crawler-track means to the ATV and provides:

-positioning of the second pair of wheels with respect to the driving wheels;

-tensioning of the crawler-track means during positioning thereof, with a novel adjustment means therefor and automatic maintenance thereof during use; and.

-cushioning and shock-absorbing of the second pair of wheels with respect to the driving wheels and the vehicle, including a novel shock-absorbing attachment thereof.

The novel design of the preferred embodiment of the crawler track means provides positive tracking of the tracks on the driving wheels, without the possibility of the tracks being thrown off by some unusual maneuver or vagary of the terrain.

The novel structure of the preferred embodiment of the "grousers", or traction bars, of the crawler track means, provides substantially increased traction in all circumstances, while reducing the amount of energy required for operation.

The novel structure of the preferred embodiment of the crawler track gripper means provides substantially greater protection against the accidental loss of a crawler track, while materially reducing the wear on the side walls of the low-pressure tires, from this source.

The novel design of the steering ski permits an ATV so equipped to back up without digging the ski into the snow.

The novel design of the present invention permits the crawler track attachment and the steering ski to be assembled or disassembled within a matte of minutes, even under field conditions, making repairs a simple matter.

The novel design of the attachment means of the present invention, especially in the form of the preferred embodiment as herein presented, can be adapted to nearly any of the available all-terrain vehicles today, with only minor modifications in structure of the various attachment means, without avoiding the spirit or intent of the invention.

The present invention also can be adapted to various utility uses, such pulling light utility trailers and cultivating machinery, and the like equipment.

## BRIEF DESCRIPTION OF THE DRAWINGS

FIG. 1 is an oblique perspective view of the crawler-track attachment of the present invention as15 mounted in place on a typical ATV.

FIG. 2 is an oblique perspective view of the steering ski attachment of the present invention, disclosing the novel mounting means thereof.

FIG. 3A and 3B are views of the first attachment means on two different ATVs, including a portion of the first connection means on each.

FIG. 4A and 4B are views of the second attachment means on two different ATVs, including a portion of the second connection means on each.

FIG. 5 is a general view of the T-shaped structure.

FIG. 6 is a close-up view of the T-shaped structure disclosing the third and fourth attachment means.

FIG. 7 is a view of the traction bar of the present invention.

FIGS. 8 and 8a are views of the crawler-track gripper means of the present invention.

FIG. 9 is a general view of the preferred embodiment of the T-shaped structure.

FIG. 10 is a close-up cut-away view of the preferred embodiment of the T-shaped structure disclosing the novel tensioning adjustment means.

FIG. 11 is a close-up view of the preferred embodiment of the novel semiflexible and shock-absorbing fourth attachment means.

FIG. 12 is an oblique perspective view of the preferred embodiment of the "grouser" or traction bar of the present invention.

FIG. 13 is a view in cross-section of the preferred embodiment of the "grouser" in FIG. 12, depicting its action in snow or mud, and to illustrate how it helps to save energy in operation.

FIG. 14 is an oblique perspective view, in phantom, of the preferred embodiment of the structure of the crawler track means, including the various forms and their arrangement thereon of the gripper means and the grousers.

## DETAILED DESCRIPTION OF THE PRESENT INVENTION

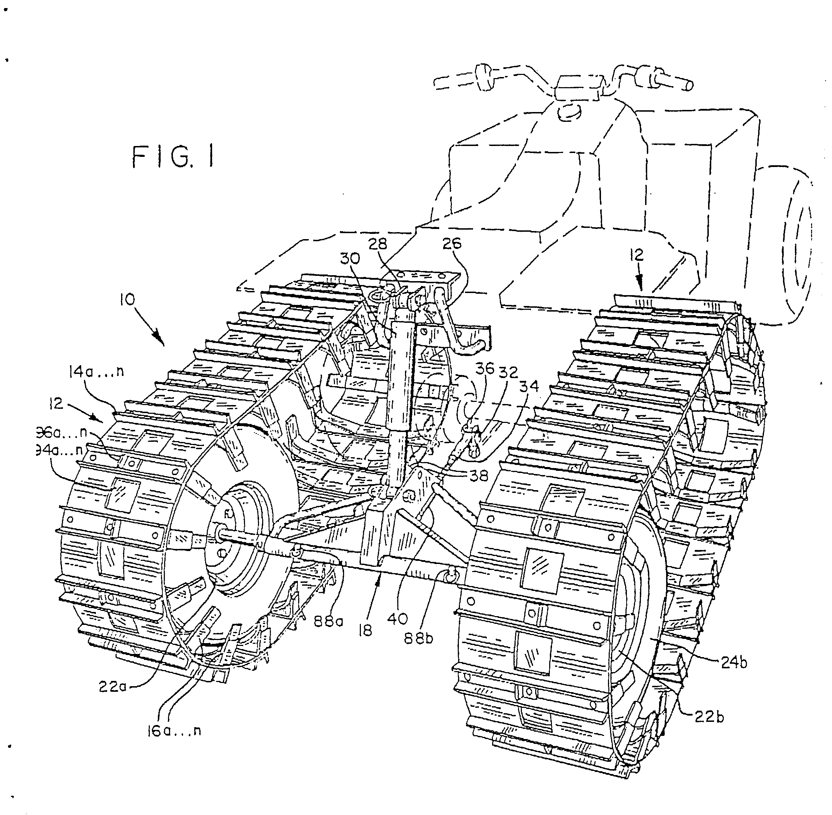

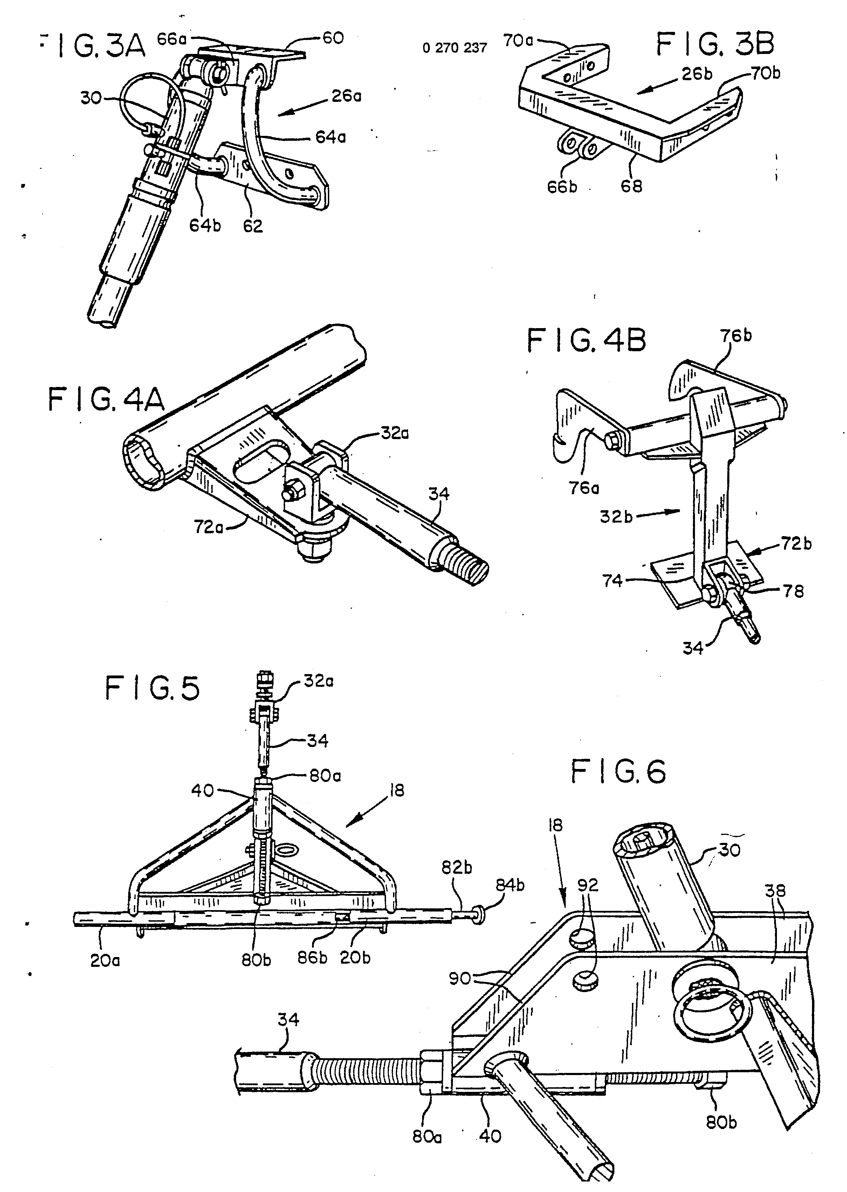

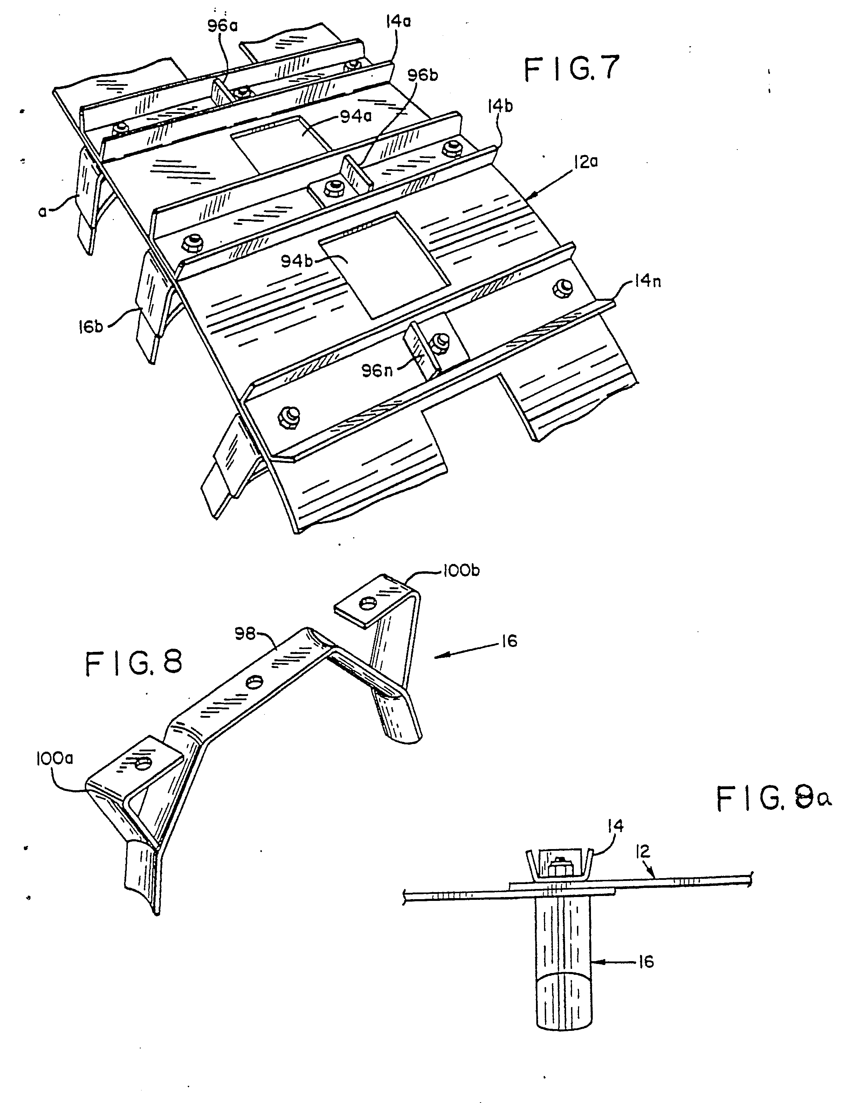

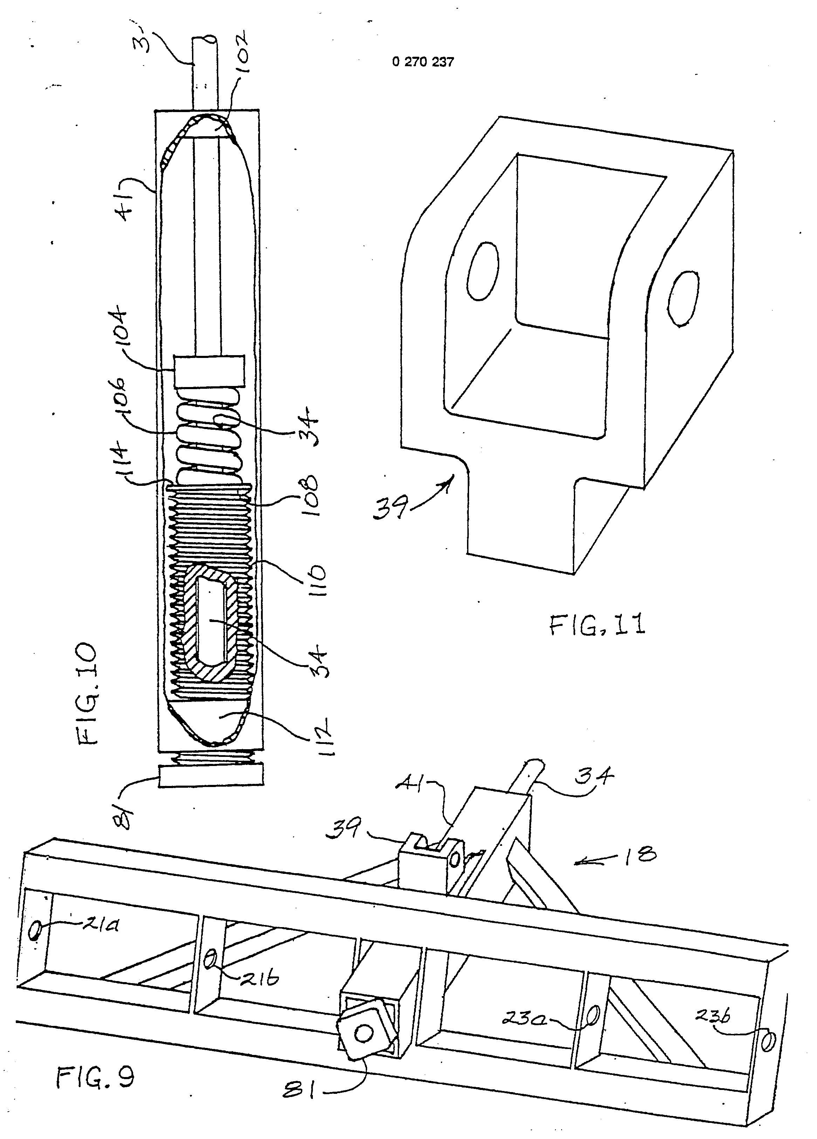

Turning now to FIG. 1, we see crawler-track attachment 10, with crawler-track means 12 and 12a, each with traction bars 14a . . . 14n thereon, as described and disclosed more clearly in connection with FIGS. 7,9,10, and 12-14, and crawler track gripper means 16a . . . 16n, as described and disclosed more clearly in connection with FIGS. 8 and 11 hereinafter. T-shaped structure 18 has axle mounting means 20 (described and disclosed more clearly in connection with FIG. 5, hereinafter), for mounting and holding axle means 82a and 82b and wheels 22a and 22b, with low-pressure all-terrain tires 24a and 24b mounted thereon, all respectively. First attachment means 26, incorporating thereon an attachment 28 for one end of first connection means 30, is fastened to a convenient portion of the host ATV, as hereinafter described more completely on connection with FIGS. 3A and 3B. Second attachment means 32 is usually provided on the host ATV, as depicted here and in connection with FIGS. 4A and 4B, although it could be specially fabricated attachment means, somewhat similar to first attachment means 26. One end of second connection means 34 is fastened to second attachment means 32, in an appropriate manner, as hereinafter described and disclosed more completely in connection with FIGS. 4A and 4B.

T-shaped structure 18 also incorporates third attachment means 38 and fourth attachment means 40, as more clearly described and disclosed in connection with FIGS. 5,6 and 9-11.

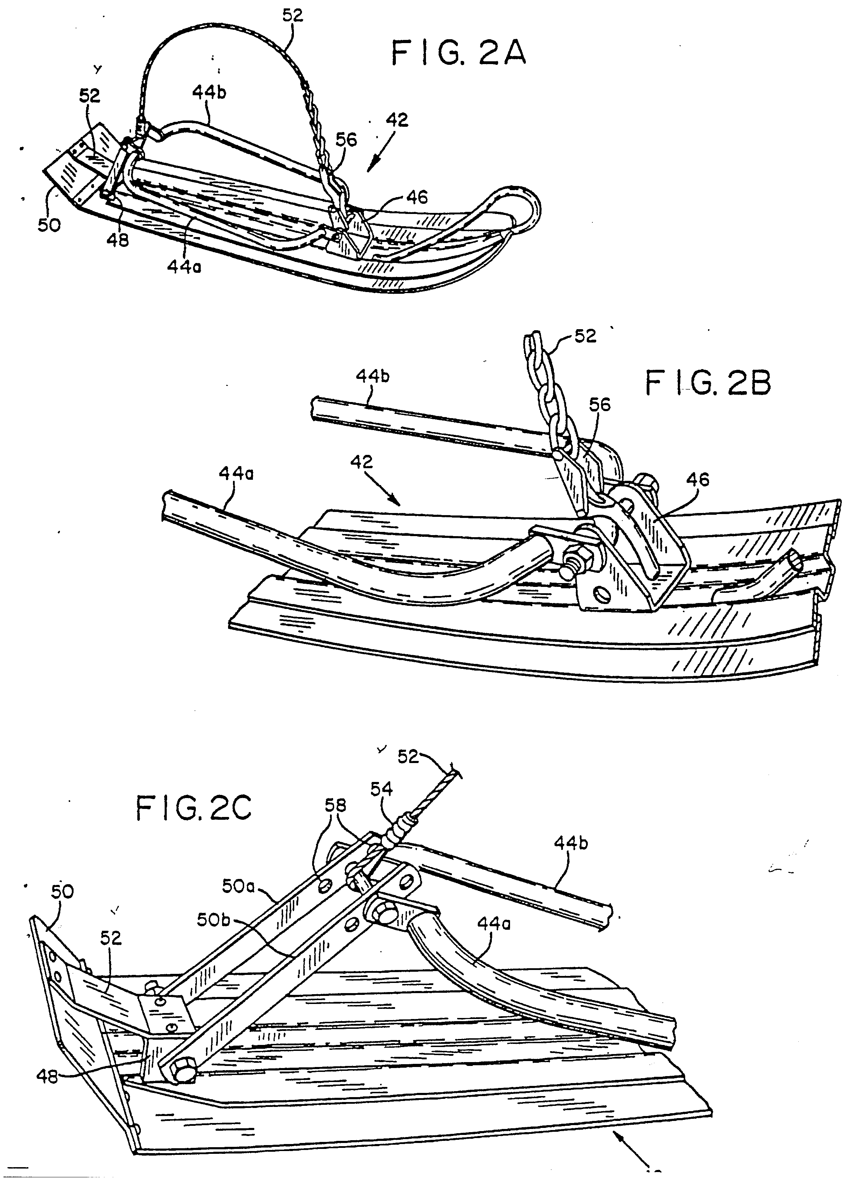

FIG. 2 discloses the novel attachment structure for steering ski 42, which is a standard steering ski for a snow-mobile, widened and with novel mounting means attached thereto, as now to be described.

C-shaped holder means 44a and 44b are fastened to ski 42 by a U-shaped bracket 46 at the front, and inverted U-shaped bracket 48 and connecting links 50a and 50b at the rear. The front tire (not shown) of the host ATV fits into the pocket created by C-shaped holder means 44a and 44 b. Cable 52, fastened at the rear of ski 42 by conventional cable fitting 54 and at the front by conventional cable snap clamp 56, is looped around the circumference of the tire tightly. Adjustable tensioning means and several holes 58 in connecting links 50a and 50b permit accommodation of several sizes of low-pressure tires.

The upwardly tilted heel plate 50 on ski 42 permits the operator to back up the ATV, a maneuver not possible with ordinary skis without this feature. Bracket 52, fastened to the top of inverted U-shaped bracket 48, provides support for heel-plate 50 under conditions of heavy load or high speed.

Turning now to FIG. 3A and 3B, we see two versions of first attachment means 26, each one for adapting the invention to a different host ATV. First attachment means 26a is formed of inverted U-shaped member 60, attached to flat plate 62 by means of curved J-shaped members 64a and 64b. Member 60 fits over a portion of the seat-supporting structure of the host ATV and is otherwise bolted thereto, and member 62 is bolted to a conventional portion of the frame of the host ATV. U-shaped bracket 66a provides a convenient attachment point for first connection means 30 which, in the preferred embodiment, is an adjustable airfilled shock absorber, as hereinafter more completely described. First attachment means 26b, for a different host ATV, is a U-shaped bracket formed of box tubing 68 welded to side members 70a and 70b, and is designed to be bolted to the seat-supporting structure of the ATV. U-shaped bracket 66b forms a convenient attachment point for first connection means 30, as depicted in FIG. 3A. It will be realized by those skilled in the art that first attachment means 26 could take any of many forms, each designed to adapt the present invention to a particular host ATV.

FIGS. 4A and 4B disclose two forms of second attachment means 32, each for adapting the present invention to the differing structures of different host ATVs. In FIG. 4A, for example, bracket 72a is provided on the driving axle housing of the ATV, which is a relatively strong and rigid structure. Consequently, second attachment means 32a can be a simple universal coupling, bolted onto bracket 72a as shown. On the other hand, in FIG. 4B, bracket 72b is bolted to the differential housing of the driving axle of the ATV, which is a relatively weak and yielding structure. Consequently, in addition to attachment means 32 being bolted to the ATV at point 74, it is also attached to the ATV frame by connecting links 76a and 76b, to provide the necessary support to second attachment means 32 and to transfer some of the stresses created by crawler track attachment 10 to the frame of the host ATV. To provide the necessary flexibility of coupling, coupler means 78 can be a ball-and-socket, or a rubber-mounted, type coupler. Those skilled in the art will see that other structures for providing a second attachment means on other ATVs would be relatively simple, without avoiding the spirit or intent of the present invention.

FIG. 5 provides a more detailed view of T-shaped structure 18, from below. Attachment means 32s is shown disconnected from bracket 72a, but still attached to second connection means 34, which is attach ed to T-shaped structure 18 by fourth attachment means 40 which is, in one embodiment, an appropriately sized tube welded to T-shaped structure 18 as shown. Nuts 80a and 80b (shown as backed off from fourth attachment means 40) are used to adjust the separation of the axle means of the present invention from the driving axle of the host ATV, and also to provide adjustment of the tension of the crawler track means 12a and 12b. In the preferred embodiment, axle mounting means 20a and 20b permit attaching the wheels 24a and 24b to T-shaped structure 18 by means of stub-(or half-) axles 82a (not shown) and 82b. The mushroom-shaped cap 82, welded to axle 82b, prevents the wheel from coming off the axle, while a diametrically drilled hole (not shown) in the end 86b of axle 82b permits insertion of retainer bolts 88a and 88b (best seen in FIG. 1).

FIG. 6 shows a close-up view of T-shaped structure 18 from the side, giving a more detailed view of third attachment means 38 and fourth attachment means 40. Also seen is a second end of the first connection means 30 and a second end of second attachment means 34 attached, respectively, to third attachment means 38 and fourth attachment means 40. It will be seen that U-shaped member 90 is welded or otherwise affixed to attachment 40 and to various other structural members of T-shaped structure 18. Holes 92 in U-shaped member 90 permit adjustment of the position of the wheels 24a and 24b with respect to the host vehicle and its driving wheels, as hereinafter more completely described.

Although FIG.S 5 and 6 disclose one embodiment for T-shaped structure 18, and FIG. 9-11 disclose the preferred embodiment, as hereinafter described, it will be seen by those skilled in the art that many other forms and structures shapes could perform the same function without avoiding the spirit or intent of the present invention.

FIG.7, 8 and 8a disclose more clearly one embodiment of the structure of traction bars 14a . . . 14n and the crawler-track gripper means 16a. . . 16n, which are mounted on crawler track means 12a and 12b. Crawler track means 12a and 12b is an appropriate length of standard belting material of width adequate to cover the tread of the tire used, and formed into a loop as hereinafter described. Voids 94a and 94b can be fabricated into the belting, if desired, to permit the tire to shed snow which might become packed between the tires and the belting. (The problem has not been found to be serious, however,) Traction bars 14a . . . 14b are attached to the belting in any convenient manner with appropriate spacing between bars. Traction bars 14a . . . 14n are U-shaped, with the distance between the lips being slightly greater than the width across the base, to permit snow packed therein to be ejected. Members 96a . . . 96n, placed with opposite orientation on alternate bars, give . lateral stability on side-hills, and also tend to function somewhat as the metal edge strips on skis.

Crawler track gripper means 16a . . . 16n, grip the tires of the host ATV and of the attachment of the invention, transmitting the power of the driving wheels to crawler track means 12a and 12b more efficiently. Gripper member 98 grips the trend of the tires, and support members 100a and 100b help to reduce any tendency of the extended arms of the gripper members to spread from the pressure of the tires and/or compacted snow. FIGS 8 and 8a depict one embodiment of the gripper means. The arms are "dished" to give resistance to bending forces, and the support members 100a and 100b are also "dished" on the supporting portion, making it a highly distortion-resistant structure when assembled with the traction bars as shown in FIG. 7.

FIGS. 9-11 disclose the preferred embodiment of T-shaped structure 18 and its functions. FIG. 9 discloses that member 41, is this preferred embodiment, incorporates the functions of fourth attachment means 40 of FIG. 5 into the T-shaped structure itself. Member 41 also encloses within itself the structure and elements of a novel adjustment and tensioning means described and disclosed more fully in connection with FIG. 10, hereinafter, including adjustment means 81 for:

- adjusting the separation between the driving wheels of the hot ATV and wheels 24a and 24b of attachment 10; and

-the tension in the crawler track means 12a and 12b, by a novel tensioning means described and disclosed more clearly in connection with FIG. 10, hereinafter.

Third attachment means 39, more clearly described and disclosed in connection with FIG. 11, provides a tough but resilient mounting for first connection means 30 (not shown). In this embodiment, half-axle 82a is inserted into axle mounting holes 21a and 21b, and half-axle 82b is inserted into mounting holes 23a and 23b, thereby retaining the same easily assembled structure described and disclosed in connection with FIG. 5, hereinbefore.

FIG. 10, in cut-away section, discloses in detail the novel adjustment means for:

-adjusting the separation between the driving axle of the host ATV and the driven axle of the attachment 10; and

-providing an additional tension adjustment and maintaining means for the crawler track means 12a and 12b.

In this preferred embodiment, second connection means 34 extends into member 41 through block 102, which is firmly affixed in the end thereof. Shoulder 104 is fabricated on means 34, and spring 106 is compressed between shoulder 104 and the interior end 108 of adjustment screw 110, which is fabricated of a tough resilient plastic material, such as 90 durometer polyurethane. Screw 110 extends through nut 112 and terminates in adjustment means 81, as clearly disclosed in FIG. 9, permitting convenient adjustment of both the separation between the driving and the driven axles, and the tension in the crawler track means 12a and 12b. Means 34 extends through spring 106 and into adjustment screw 110, providing lateral rigidity to the complete adjustment structure. It will be seen by those skilled in the art that, under some conditions, connection means 34 may extend beyond the end of screw 110, depending upon the host ATV, the separation of the axles and the lengths of crawler track means 12a and 12b. To eliminate any possibility of sharp edges on spring 106 scraping away portions of screw 100 as it is rotated thereagainst during adjustment, a bearing washer 112 may be inserted therebetween.

FIG. 11 discloses the structure of third attachment means 39, which is demountably but securely attached by any conventional means to member 41 or more other appropriate point on the preferred embodiment of T-shaped structure 18, and which provides a strong but resilient anchor point for first connection means 30, as hereinbefore discussed. It is fabricated of a tough, resilient plastic material, such as 90 durometer polyurethane, which will absorb the inevitable twisting and jarring which will occur in normal operation between the host ATV and the driven wheels 24a and 24b, and will reduce the strains which such twisting would inflict upon first connection means 30, without incurring the expense of a universal coupling at this point.

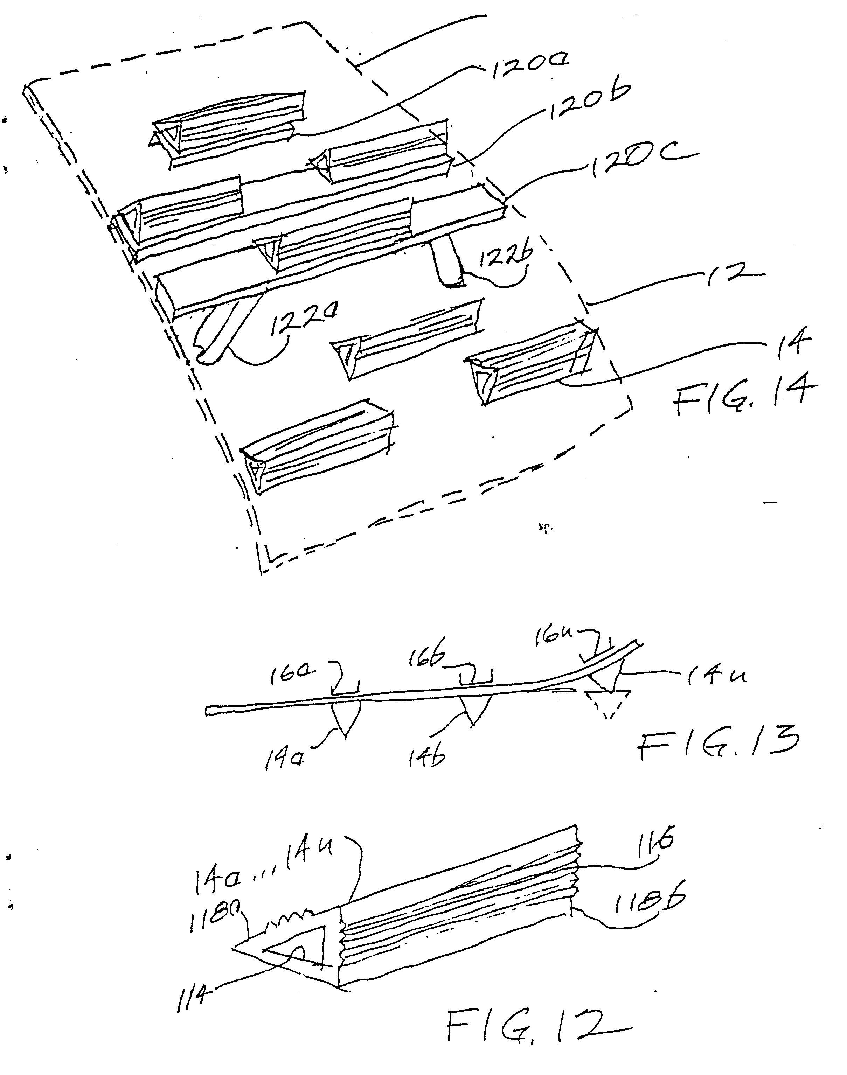

Turning now to FIGS. 12 and 13, we see the preferred embodiment of grousers (or traction bars) 14a . . . 14n. Grousers 14a . . . 14n are wedge-shaped, having a central longitudinal passage 114 therethrough, and having several ridges 116 fabricated longitudinally into each operating surface 118a and 118b as shown. Although they could be fabricated of rigid or semi-rigid material, grousers 14a . . . 14n are preferably fabricated of resilient material, such as rubber or one of the rubber-like compounds, and they can incorporate reinforcing wires, cords or fabric, if desired. They are fastened through the belting material to crawler track gripper means 16a . . . 16n, as described and disclosed more clearly in connection with FIGS. 13 and 14.

FIG. 13 discloses the way in which grousers 16a . . . 16n engage snow, mud or other traversed material and give more efficient operation. In order to understand more clearly the operation of this preferred embodiment grouser 16, it will be instructive to analyze the operation of presently existing grousers of conventional shape. As the driving wheel rolls forward on the crawler track and these grousers come down around the periphery of the wheel to enter the snow, it will be seen that, because of the angle at which they contact the snow, each one "grasps" a larger quantity of snow than is encompassed when the crawler track is lying flat on the surface; that is, the snow thus grasped must be compressed into the space normally occupied between grousers when the track is lying flat. This requires energy, especially if the snow is wet or hard, or as mud or other more solid materials are traversed. When the trailing wheel passes over the grouser and it begins to rise on the periphery of the wheel, its outer lip also moves backwards with respect to the snow, losing the tractive force of that grouser and requiring the expenditure of more energy than would otherwise be so.

On the other hand, grousers of the preferred structure, disclosed in FIGS. 12 and 13, tend to contact and penetrate the snow at a more-or-less right angle as the driving wheel rolls over them. Any tendency to compress the snow between adjacent grousers, as described hereinbefore in connection with presently available grousers, is absorbed by their resilient nature. The energy required therefor is recovered when the grouser emerges from the snow, as the trailing wheel lifts the crawler track from its contact therewith, and recovers from any deformation thereof caused by said tendency to compress. This action gives more traction and requires less energy than existing grousers.

In FIG. 14, we see the preferred embodiments of crawler-track gripper means 16a . . . 16n, which perform the double function of providing:

-traction so that the tires of the driving wheels are able to transfer driving energy to crawler track means 12a and 12b; and

-backing structure for fastening grousers 14a . . . 14n to crawler track means 12a and 12b.

Gripper means 16a . . . 16n are of several types, constructed around a simple form, a shallow-U shape:

-form 120a, which is the simplest;

-form 120b, which is similar to form 120a except that it spans the whole width of crawler track 12 belting material: and

-form 120c, which is similar in length to form 120b, but incorporates uprights 122a and 122b.

Form 120a provides backing for a single grouser 14, which is preferably located in the center position on the crawler track 12, although they could be located on either side, as will be recognized by those skilled in the art.

Form 120b is similar to form 120a except that it spans the whole width of the crawler track 12: it preferably provides backing for two grousers 14a and 14b, located at either side of track 12, as shown.

Form 120c is similar to form 12ob except that it incorporates uprights 122a and 122b; it preferably provides backing for a single grouser 14 located in the center of track 12. This arrangement has great utility, in that it permits uprights 122a and 122b to flex if pressed outwardly by deformation of the tires, whereas, if form 120c were to provide backing for two grousers 14a and 14b, as does form 120b, or for a single grouser 14 placed on the side of crawler track means 12, there would be substantially less sideways give to the uprights, more wear on the sidewalls of the tires, and a greater tendency of the tires to "climb" the uprights and throw off the track 12, under unusual conditions of load, tire pressure, or packed snow.

Assembly of the attachment of the present invention with the host ATV is quite simple and rapid. If the first and second attachment means have not been attached to the host ATV, it is easily done by the use of simple tools. If these structures have been previously attached to the host ATV, first and second connection means 30 and 34 are attached to first and second attachment means 26 and 32, respectively. Crawler track means 12a and 12b are looped over wheels 24a and 24b, and the driving wheels of the host ATV. The two ends of the belting material are overlapped as in FIG. 7, with traction bar 14 mounted on the outside and gripper means 16, in either of form 120b or 120c, on the inside. When these are fastened together by suit able means, preferably with aircraft type bolts and nuts, nuts 80a and 80b, or adjustment means 81, are adjusted to give the required separation between the front and back wheels, and to give the required tension on crawler track means 12a and 12b, depending upon the type of snow, its condition, and other pertinent factors. When the locale is reached where the converted ATV will be used, connection means 30 or adjustment means 81 will be adjusted to properly position rear wheels 24a and 24b to provide the desired traction for the snow conditions, and to give the desired resiliency for shock absorbing.

It will be found that the maneuverability of the machine is considerably greater than would be expected, and that the power transmitted to the tracks, and thus to the snow, is much greater than is normally obtained on a snow-mobile.

As has been stated hereinbefore, the present invention can be adapted to fit nearly any of the standard all-terrain vehicles. Two vehicles that have been so adapted are the KAWASAKI BAYOU 300 and the HONDA TRX 200. Tire sizes which have been accomodated range from the HONDA H-TRAK A/T OHTSU 25X12.00 - 9, to the DUNLOP B-68 24X11.00-10 LP 3-20psi, to the GOODYEAR TERRA TIRE 21X11.00-8 NHS extra low pressure tire. Other sizes of tires and other makes of vehicles could easily be accomodated.

Those skilled in the art will quickly see that there are numerous changes which can be made in the various elements of the present invention which would not depart from the spirit or intent of it.

The terms and expressions which have been employed in the foregoing specification are used therein as terms of description, and not of limitation, and there is no intention, in the use of such terms and expressions, of excluding equivalents of the features shown and described or portions thereof, it being recognized that the scope of the invention is defined and limited only by the claims which follow.

## Claims

CLAIM 1. In a position and tension adjustment means for a crawler track attachment to be attached to an all-terrain vehicle, said vehicle having a second attachment point and said crawler track attachment having a substantially T-shaped structure having a fourth attachment point , said adjustment means having a connection means connected between said second and said fourth attachment points,

THE IMPROVEMENT COMPRISING

a. said T-shaped structure incorporating therein:

1. threaded nut means fabricated into said T-shaped structure;

2. adjustment means with threads thereon extending through said nut means into said T-shaped structure;

3. resilient compression means;

4. said connection means extending slidably and longitudinally into said T-shaped structure and having thereon a shoulder;

b. said resilient compression means being compressed between said shoulder and said adjustment means, thereby positioning said fourth attachment point with respect to said second attachment point and providing resilient tensioning means for said crawler track means.

CLAIM 2. A resilient attachment means for a crawler track attachment for an all-terrain vehicle, said attachment means for attaching a connection means thereto, comprising:

a. a substantially cube-shaped member with mounting means on one face thereof, said member being fabricated of resilient material;

b. two faces of said member being open, one of said two faces being adjacent to, and the other of said two faces being opposite to, said face with said mounting means thereon, said open faces creating a pocket between said remaining faces; and

c. said pocket having connection means therein for inserting therein and connecting thereto said connection means.

CLAIM 3. Grousers for mounting on the outer surface of crawler track means, said grousers being of substantially triangular cross-section and having two operating faces thereon, and having therein a substantially triangularly shaped bore, and having on said operating faces a multiplicity of triangularly shaped ribs extending longitudinally thereon.

CLAIM 4. Gripper means for mounting on the inner surfaces of crawler track means, said gripper means being of a substantially shallow U-shape and being placed across the said inner surface.

CLAIM 5. In a crawler track attachment for an all-terrain vehicle, said vehicle having:

I. a first pair of wheels drivingly connected to said vehicle and having mounted thereon a first pair of low-pressure all-terrain tires;

II. said vehicle having thereon a first and second attachment means; and

said crawler track attachment having:

A. a substantially T-shaped structure having axle mounting means thereon, and having third and fourth attachment means affixed thereto;

B. a second pair of wheels, each of which:

I. is mounted on an axle, said axle being mounted in said axle-mounting means;

II. has mounted thereon a low-pressure all-terrain tire; and

III. is located rearward to a corresponding one of said first pair of wheels;

C. said first attachment means being connected by first connecting means to said third attachment means, and said second attachment means being connected by second connecting means to said fourth attachment means; and

D. a pair of crawler track means frictionally mounted on said first pair of low-pressure all-terrain tires and extending rearward to and around said second pair of low-pressure all-terrain tires;

THE IMPROVEMENT COMPRISING:

wherein said third attachment means includes:

a. a substantially cube-shaped member with mounting means on one face thereof, said member being fabricated of resilient material;

b. two faces of said member being open, one of said two faces being adjacent to, and the other of said two faces being opposite to, said face with said mounting means thereon for mounting on said T-shaped structure, said open faces creating a pocket between said remaining faces; and

c. said pocket having attachment means therein for inserting therein and connecting thereto said second connection means.

CLAIM 6. In a crawler track attachment for an all-terrain vehicle, said vehicle having:

I. a first pair of wheels drivingly connected to said vehicle and having mounted thereon a first pair of low-pressure all-terrain tires;

II. said vehicle having thereon a first and second attachment means; and

said crawler track attachment having:

A. a substantially T-shaped structure having axle mounting means thereon, and having third and fourth attachment means affixed thereto;

B. a second pair of wheels, each of which:

I. is mounted on an axle, said axle being mounted in said axle-mounting means;

II. has mounted thereon a low-pressure all-terrain tire; and

III. is located rearward of a corresponding one of said first pair of wheels;

C. said first attachment means being connected by first connecting means to said third attachment means, and said second attachment means being connected by second connecting means to said fourth attachment means; and

D. a pair of crawler track means frictionally mounted on said first pair of low-pressure all-terrain tires and extending rearward all-terrain tires;

THE IMPROVEMENT COMPRISING:

grousers for mounting on the outer surface of said crawler track means, said grousers being of substantially triangular cross-section and having two operating faces thereon, and having therein a substantially triangularly shaped bore, and having on said operating faces a multiplicity of triangularly shaped ribs extending longitudinally thereon.

CLAIM 7. In a crawler track attachment for an all-terrain vehicle, said vehicle having:

I. a first pair of wheels drivingly connected to said vehicle and having mounted thereon a first pair of low-pressured all-terrain tires;

II. said vehicle having thereon a first and second attachment means; and

said crawler track attachment having:

A. a substantially T-shaped structure having axle mounting means thereon, and having third and fourth attachment means affixed thereto;

B. a second pair of wheels, each of which:

I. is mounted on an axle, said axle being mounted in said axle-mounting means;

II. has mounted thereon a low-pressure all-terrain tire; and

III. is located rearward of a corresponding one of said first pair of wheels;

C. said first attachment means being connected by first connecting means to said third attachment means, and said second attachment means being connected by second connecting means of said fourth attachment means; and

D. a pair of crawler track means frictionally mounted on said first pair of low-pressure all-terrain tires and extending rearward to and around said second pair of low-pressure all-terrain tires;

THE IMPROVEMENT COMPRISING:

gripper means for mounting on the inner surfaces of said crawler track means, said gripper means being of a substantially shallow U-shape and being placed across the said inner surface.

CLAIM 8. In a crawler track attachment for an all-terrain vehicle, said vehicle having:

I. a first pair of wheels drivingly connected to said vehicle and having mounted thereon a first pair of low-pressure all-terrain tires;

II. said vehicle having thereon a first and second attachment means; and

said crawler track attachment having:

A. a substantially T-shaped structure having axle mounting means thereon, and having third and fourth attachment means affixed thereto;

B. a second pair of wheels, each of which:

I. is mounted on an axle, said axle being mounted in said axle-mounting means;

II. has mounted thereon a low-pressure all-terrain tire; and

III. is located rearward of a corresponding one of said first pair of wheels;

C. said first attachment means being connected by first connecting means to said third attachment means, and said second attachment means being connected by second connecting means to said fourth attachment means; and

D. a pair of crawler track means frictionally mounted on said first pair of low-pressure all-terrain tires and extending rearward to and around said second pair of low-pressure all-terrain tires;

THE IMPROVEMENT COMPRISING:

a. said T-shaped structure incorporating therein:

1. threaded nut means fabricated into said T-shaped structure;

2. adjustment means with threads thereon extending through said nut means into said T-shaped structure;

3. resilient compression means;

4. said second connection means extending slidably and longitudinally into said T-shaped structure and having thereon a shoulder;

b. said resilient compression means being compressed between said shoulder and said adjustment means, thereby positioning said fourth attachment means with respect to said second attachment means and providing resilient tensioning means for said crawler track means.

CLAIM 9. In a crawler track attachment for an all-terrain vehicle, said vehicle having:

I. a first pair of wheels drivingly connected to said vehicle and having mounted thereon a first pair of low-pressure all-terrain tires;

II. said vehicle having thereon a first and second attachment means; and

said crawler track attachment having:

A. a substantially T-shaped structure having axle mounting means thereon, and having third and fourth attachment means affixed thereto;

B. a second pair of wheels, each of which:

I. is mounted on an axle, said axle being mounted in said axle-mounting means;

II. has mounted thereon a low-pressure all-terrain tire; and

III. is located rearward of a corresponding one of said first pair of wheels;

C. said first attachment means being connected by first connecting means of said third attachment means, and said second attachment means being connected by second connecting means to said fourth attachment means; and

D. a pair of crawler track means frictionally mounted on said first pair of low-pressure all-terrain tires and extending rearward to and around said second pair of low-pressure all-terrain tires;

THE IMPROVEMENT COMPRISING:

a. said third attachment means includes:

1. a substantially cube-shaped member with mounting means on one face thereof, said member being fabricated of resilient material;

2. two faces of said member being open, one of said two faces being adjacent to, and the other of said two faces being opposite to, said face with said mounting means thereon, said open faces creating a pocket between said remaining faces; and

3. said pocket having attachment means therein for inserting therein and connecting thereto said first connection means;

b. grousers for mounting on the outer surface of said crawler track means, said. grousers being of substantially triangular cross-section and having two operating faces thereon, and having therein a substantially triangularly shaped bore, and having on said operating faces a multiplicity of triangularly shaped ribs extending longitudinally thereon;

c. gripper means for mounting on the inner surfaces of said crawler track means, said gripper means being of a substantially shallow U-shape and being placed across the said inner surface; and

d. position and tension adjustment means including:

1. said T-shaped structure incorporating therein:

A. threaded nut means fabricated into said T-shaped structure;

B. adjustment means with threads thereon extending through said nut means into said T-shaped structure;

C. resilient compression means;

D. said connection means extending slidably and longitudinally into said T-shaped structure and having thereon a shoulder;

2. said resilient compression means being compressed between said shoulder and said adjustment means, thereby positioning said fourth attachment point with respect to said second attachment point and providing resilient tensioning means for said crawler track means.

CLAIM 10. The crawler track attachment means of CLAIM 9, wherein said grousers extend only partially across said crawler track means.

CLAIM 11. The crawler track attachment means of CLAIM 9, wherein said grousers extend across substantially one-third of said crawler track means.

CLAIM 12. The crawler track attachment means of CLAIM 10, wherein said one-third is the middle one-third of said crawler track means.

CLAIM 13. The crawler track attachment means of CLAIM 11, wherein said one-third is an outer one-third of said crawler track means.

CLAIM 14. The crawler track attachment means of CLAIM 9, wherein said crawler track means have gripper means mounted on the inner surface thereof.

CLAIM 15. The crawler track attachment means of CLAIM 14, wherein said gripper means extends across said full width of said crawler track means.

CLAIM 16. The crawler track attachment means of CLAIM 14, wherein said gripper means extends across less than said full width of said crawler track means.

CLAIM 17. The crawler track attachment means of CLAIM 14, wherein said gripper means extends across substantially one third of said full width of said crawler track means.

CLAIM 18. The crawler track attachment means of CLAIM 15, wherein said gripper means has upright members thereon, with said upright members spaced to receive said tires therebetween.

CLAIM 19. The crawler track attachment means of CLAIM 2 or 3, wherein said grousers and said gripper means are placed substantially back-to-back on the outer and inner surfaces, respectively, of said crawler track means.

FIG. I

FIG. 2A

FIG. 2B

FIG. 2C

FIG.3A

FIG.3B

FIG.4A

FIG.4B

FIG.5

FIG.6

0 270 237

FIG.7

FIG.8

FIG.8a

FIG.10

FIG.11

FIG.9

120a

120b

120c

122b

122a

12

14

FIG. 14

16a

16b

16u

14u

14a

14b

FIG. 13

14a ... 14u

118a

116

118b

114

FIG. 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 618 015  (M. YOCHUM)<br>* Figures 1-3; column 2, line 57 - column 3, line 25; column 6, line 62 - column 7, line 19 * | 1,4-9,<br>18 | B 62 D  55/04<br>B 62 M  27/02 |
| A | FR-A-1 251 641  (W. RUF)<br>* Figures 1,2; page 1, left-hand column, line 19 - right-hand column, line 15 * | 1,8,9 | |
| X | US-A-3 390 924  (R.B. BUMBAUGH)<br>* Figures 2-4; column 2, lines 16-56 * | 4 | |
| Y | | 3 | |
| A | | 6,7,9,<br>14,15,<br>18,19 | |
| X | FR-A-2 057 398  (M. FENEUX et al.)<br>* Figure 3; page 2, lines 28-37; page 3, line 25 - page 4, line 6 * | 4 | |
| A | | 3,6,7,9<br>,14,15,<br>18,19 | TECHNICAL FIELDS SEARCHED (Int. Cl.4) |
| Y | US-A-3 830 551  (Y. MASAOKA et al.)<br>* Figures 6,7,9; column 3, lines 48-63; column 4, lines 20-29 * | 3 | B 62 D<br>B 62 M |
| A | | 6,9 | |

The present search report has been drawn up for all claims

| Place of search | Date of completion of the search | Examiner |
|---|---|---|
| THE HAGUE | 12-02-1988 | CHLOSTA P. |